Europäisches Patentamt

(19) European Patent Office

Office européen des brevets

(11) Publication number: **0 146 981**

**A1**

(12) # EUROPEAN PATENT APPLICATION

(21) Application number: 84201695.8

(22) Date of filing: 22.11.84

(51) Int. Cl.⁴: **E 21 B 43/22**
E 21 B 43/02, E 21 B 43/25
E 21 B 43/27

(30) Priority: 07.12.83 FR 8319594

(43) Date of publication of application:
03.07.85 Bulletin 85/27

(84) Designated Contracting States:
DE FR GB IT NL

(71) Applicant: Etudes et Fabrication Dowell Schlumberger
Z.I. Molina BP 90
F-42003 Saint-Etienne Cedex(FR)

(72) Inventor: Desbrieres, Jacques
110 Boulevard de Fraissinette
F-42100 Saint-Etienne(FR)

(74) Representative: Richebourg, Michel François
Etudes et Fabrication Dowell Schlumberger Z.I. Molina
La Chazotte B.P. 90
F-42003 Saint-Etienne Cédex(FR)

(54) Novel applications of scleroglucane in the treatment of oil wells and oil drilling installations.

(57) The invention relates to the use of polymers designated scleroglucane in particular as: acid gelling agent, facturing fluid, agent for conveying propping agent or sand, completion fluid, pipe cleaning fluid, viscosifying agent, foam stabilizing agent. This is a remarkable set of properties.

Motif de structure du scléroglucane

Figure 1

The present invention relates to uses of a known polymer, designated scleroglucane, in a sector for which numerous specific properties must be combined for on-site implementation to be successful : that of oil drilling. Scleroglucane belongs to a broader family designated "polyglucosylglucanes".

More precisely, the invention relates to the application of scleroglucanes in viscous solution for the operations of treatment of oil wells or pipelines, to maintain or provoke changes in natural characteristics of the drainage or flow mechanisms of the fluids produced by said wells or conveyed in said pipelines, after which said scleroglucane solution is recovered after treatment of the well or pipelines.

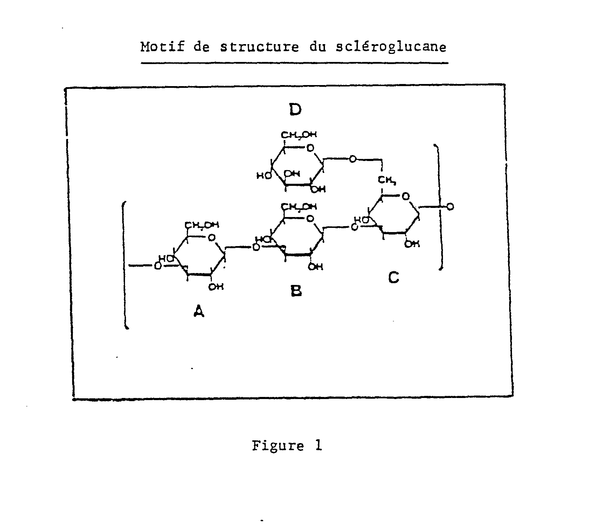

The term "scleroglucane" designates a class of neutral polysaccharides composed of a straight chain of $\beta$-D-glucopyranosyl moeities with $(1 \longrightarrow 3)$ bond comprising a $\beta$-D-glucopyranosyl fixed in $1 \longrightarrow 6$ position substantially every three moeities along the principal chain. Accompanying Figure 1 shows the structural moeities of the scleroglucane.

In fact, the number of side chains as well as the length of these side chains may vary to a certain extent as a function of the fungus used for the culture.

For the structure of this class of products, reference may usefully be made to : JOHNSON, Chem. Ind. (1965) 820 and to SANDFORD, Adv. Carbohydr. Chem. Biochem. 36 (1979), 265-313.

Applications of these polymers have been discovered heretofore in the domain of paints (U.S. Patent 3 447 940), as source of gentobiosis (U.S. 3 423 288), in medicine (U.S. 3 415 929 ; U.S. 3 421 920) and in the domain of enhanced oil recovery (U.S. 4 347 146 ; U.S. 3 372 749). Crude oil is recovered by injecting into the rock via a so-called injection well a viscous solution, containing polymers for example, in order to displace the crude oil and recover it via a so-called production well.

It has now been discovered according to the invention that this class of polymers could very advantageously be used in quite different domains in the oil industry, which opens up a highly promising field of application.

All the tests which are reported in the present specification have been made on samples of scleroglucane prepared by Ceca S.A., Vélizy, France. This product is in the form of a white powder obtained by precipitation of the culture broth by alcohol after filtration to eliminate the mycelium.

Rheology of the scleroglucane :

The rheological curve of the scleroglucane presents a Newtonian plateau with low shear rate then a region in which a power law clearly describes the rheological behaviour ; this is followed by the starting point of a second Newtonian plateau with high shear rate.

The viscosity of the first plateau is very high (in relationship with the concentration) and elastic properties of the solution appear as will be specified hereinbelow. Consequently, the scleroglucane may be used as foam stabilizing agent.

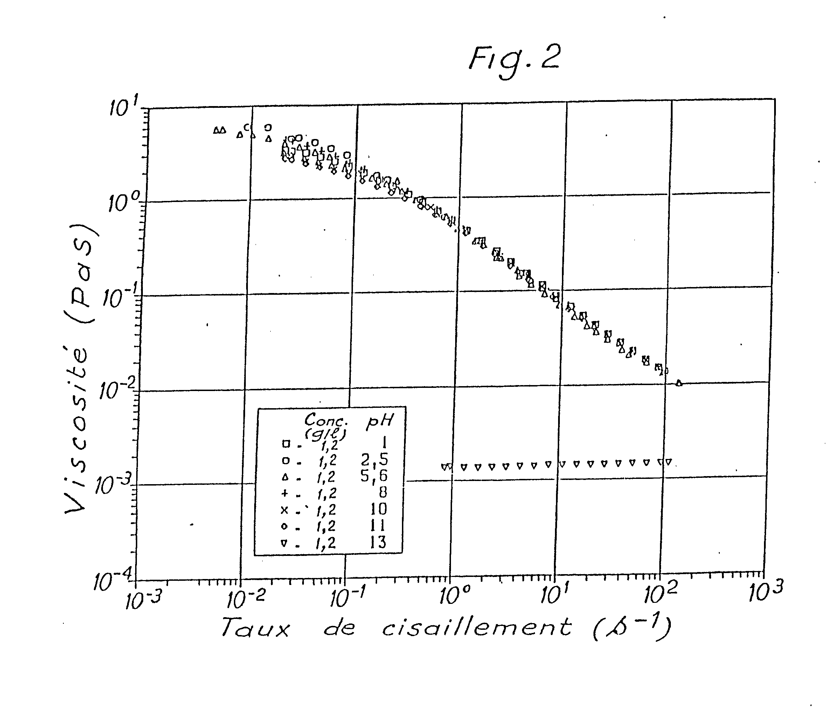

A remarkable stability of the properties of the scleroglucane as a function of the pH, up to values equal to 13, was firstly noted. Accompanying Fig. 2 shows the curve of the viscosity as a function of the shear rate, with the pH as parameter. The lines are identical up to about pH 12, where a sudden transition occurs. This transition is not reversible. This behaviour opens up the possibility of application of the scleroglucane as acid gelling agent.

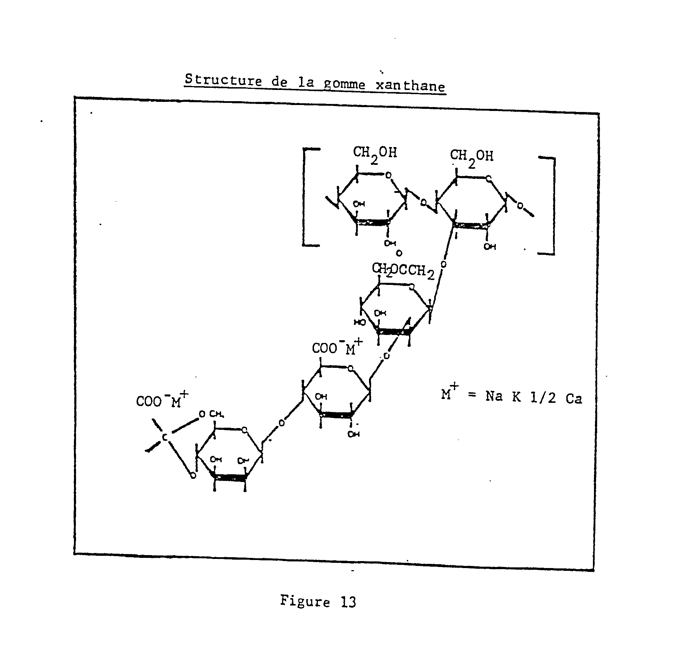

In this domain, xanthane is used at present, but with a double limitation : 15 % for acid and 140 - 160°F for temperature. Accompanying Fig. 13 shows the structure of xanthane gum.

The scleroglucane, in the same application, makes it possible to render the acid viscous up to a concentration of 35 % by weight when it is hydrochloric acid, in a temperature range going up to 140°F for a concentration of acid of 28 % by weight. The acids such as hydrofluoric acid may also be rendered viscous by the scleroglucane. The scleroglucane will be used in this application at a rate of 1.2 to 12 g/l, and preferably 2.4-4.8 g/l.

Table II hereinbelow gives reports of tests establishing the properties of the scleroglucane as acid gelling agents.

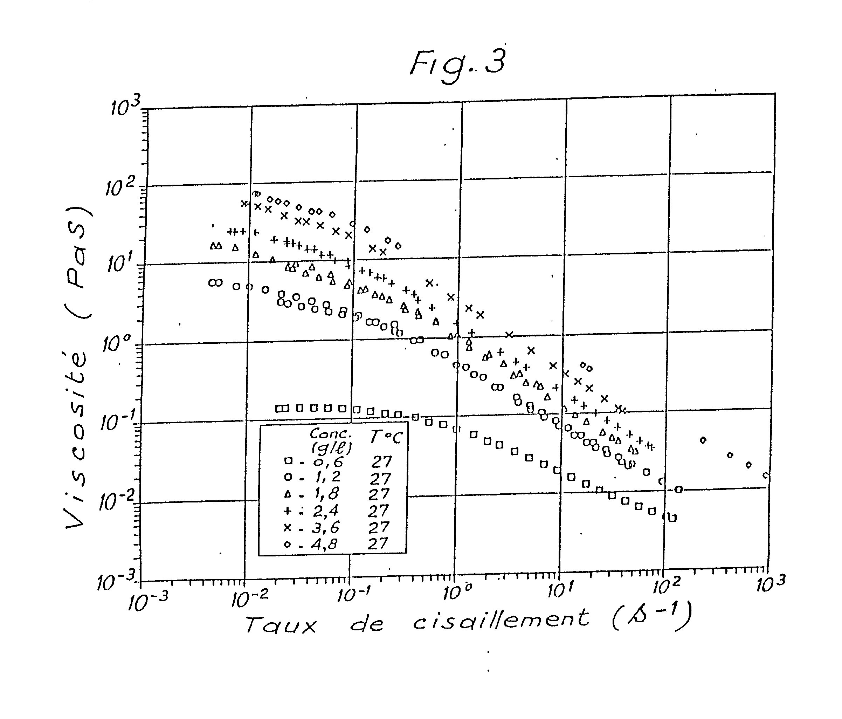

Accompanying Fig. 3 shows the influence of the concentration of scleroglucane polymer, at 80°F, on the viscosity curves, as a function of the shear rate. The lower the concentration of polymer, the more the Newtonian plateau appears for a high shear rate.

Table I hereinbelow shows the variation of the slope n′ of the viscosity curve in the region of the power law, as a function of the concentration of scleroglucane polymer.

The power law mentioned hereinabove makes it possible to characterize the fluid used according to the following formula :

$$\tau = K \dot{\gamma}^{n'}$$

In this expression, $\tau$ and $\dot{\gamma}$ respectively represent the shear stress and the shear gradient.

The scleroglucane may be used as agent for the transportation of propping agent (the more $n'$ is low, the better are the properties of conveyance of solid particles). The scleroglucane may also be used for the injection of calibrated sand to form a natural filter (use as gravel pack), the gel then being broken.

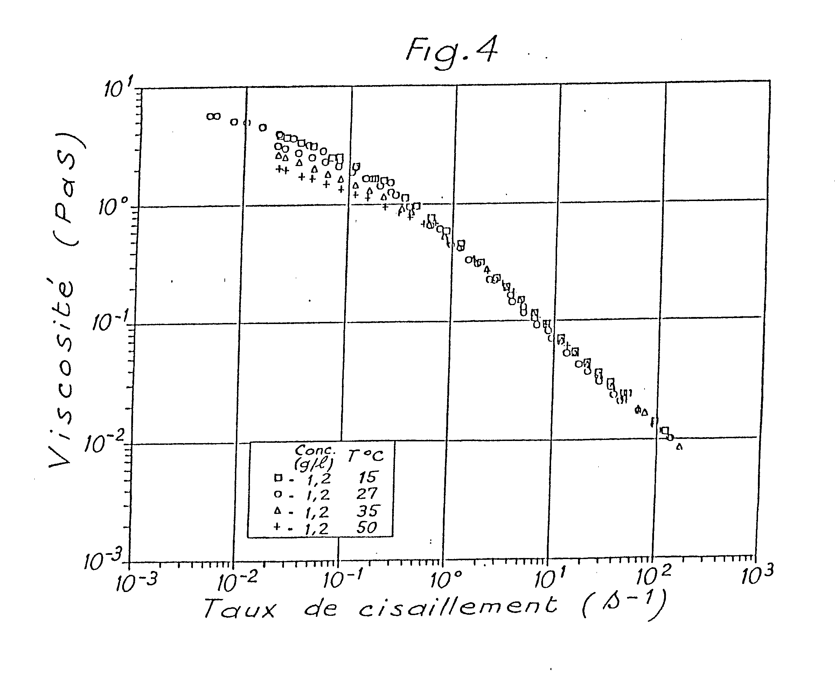

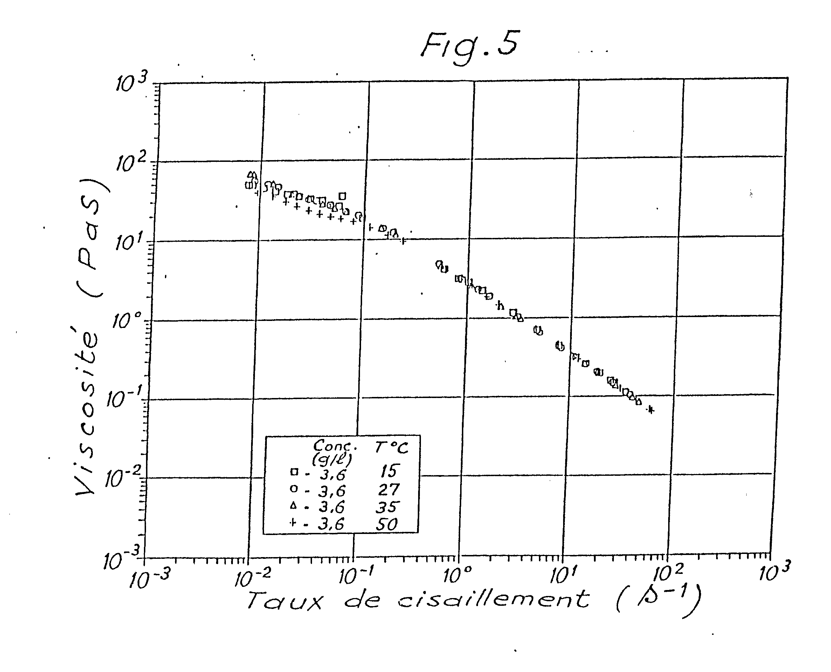

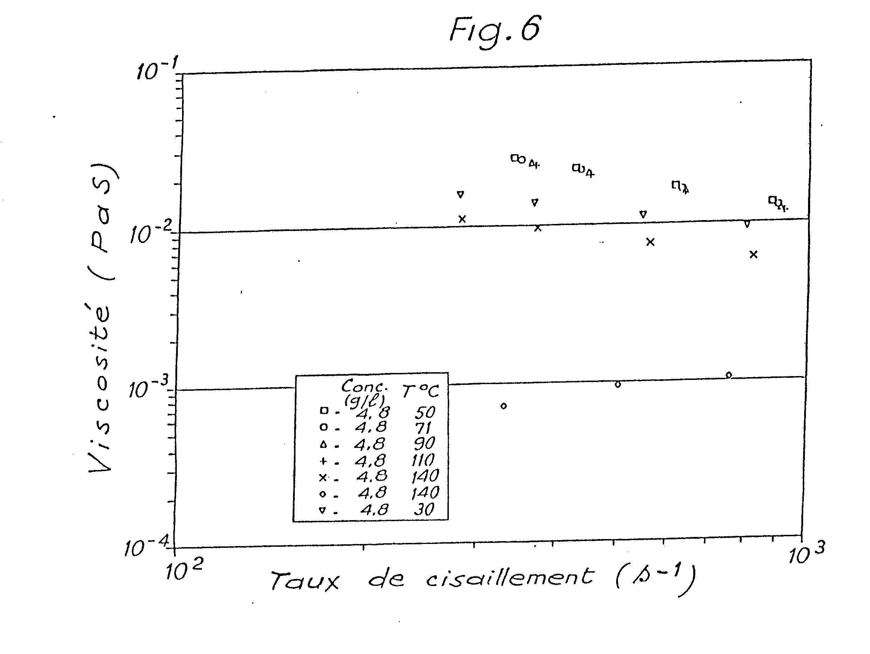

An independence of the viscosity as a function of the temperature has also been noted. Accompanying Figs. 4 and 5 demonstrate this independence for two concentrations of polymer. This independence is checked from about $60^{\circ}F$ to $270^{\circ}F$ (cf. accompanying Fig. 6). At this latter temperature, a clear diminution of the viscosity is observed. At a temperature of about $86^{\circ}F$, a diminution of about 50 % of the viscosity is observed (cf. Fig. 6).

By way of comparison, a solution of guar gum cross-linked with sodium borate presents a limit of use at $200^{\circ}F$.

Taking the foregoing into account, the scleroglucane may advantageously be used as fracturing fluid.

The scleroglucane also presents absolute independence of the viscosity as a function of salinity. In particular, the viscosity curve is not modified when sea water or a 1 % KCl solution is used. Furthermore, the presence of divalent cations has no influence on the behaviour of the scleroglucane solutions.

Scleroglucane is the only fracturing fluid which does not need to be cross-linked, is resistant to temperature and to salts, and presents good propping or consolidation agent conveying properties.

The drilling and completion fluids used by the oil companies contain salts such as potassium, calcium, sodium chloride, zinc, calcium bromide, etc..., alone or in mixture, to increase their densities without having to introduce solid particles which might damage the rocks. The polymers generally used for rendering these fluids viscous are cellulosic derivatives such as hydroxyethylcellulose at concentrations which may go up to 60 g/l and even 120 g/l (from 6 to 12 % by weight). The scleroglucane renders viscous solutions of these salts up to saturation thereof, the concentration of polymer lying in a range of 0.6 to 12 g/l (0.24 to 1.2 % by weight) and preferably 2.4 to 7.2 g/l) and the same properties of particle transportation and of filtration monitoring are then obtained. Better, it is unnecessary to modify the pH of these brines to obtain a good hydration of the scleroglucane, which is not the case of cellulosic derivatives. In fact, these brines have an acid pH which inhibits the hydration of the cellulosic derivatives. Two processes for obtaining the desired properties may be used : either increase the concentration of polymer, or increase the pH of the solution to allow a good hydration of the polymer. However, in that case, an increase of the pH brings about a precipitation of the metal hydroxides, which damages the rocks treated.

It has therefore been discovered that the scleroglucane might be used at low concentrations in very concentrated brines without losing its properties of viscosity, of particle conveyance, of filtration monitoring, and without risk of damaging the rocks.

The basic polymer, for the fracturing fluids, is at present a hydroxypropylated guar gum.

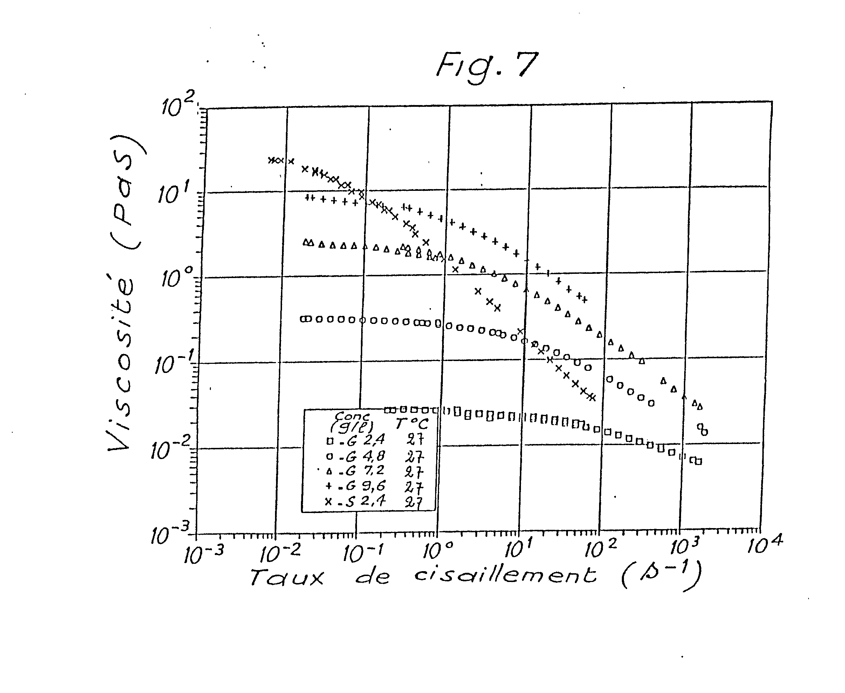

Accompanying Fig. 7 shows the influence of the concentration of guar gum (G) on the viscosity curve. The same viscosity for the Newtonian plateau is obtained at more than 9.6 g/l (1 %) instead of only 2.4 g/l (0.2 %) for the scleroglucane (S).

At the concentration of 2.4 g/l, the scleroglucane presents a viscosity at the Newtonian plateau 1000 times greater than that of the hydroxypropylated guar gum.

Moreover, the coefficient n' is only 0.13 for the scleroglucane instead of 0.65 for the hydroxypropylated guar gum, at 80°F. The propping agent conveying properties of the scleroglucane are therefore much greater than those of the hydroxypropylated guar gum, even at high shear rates.

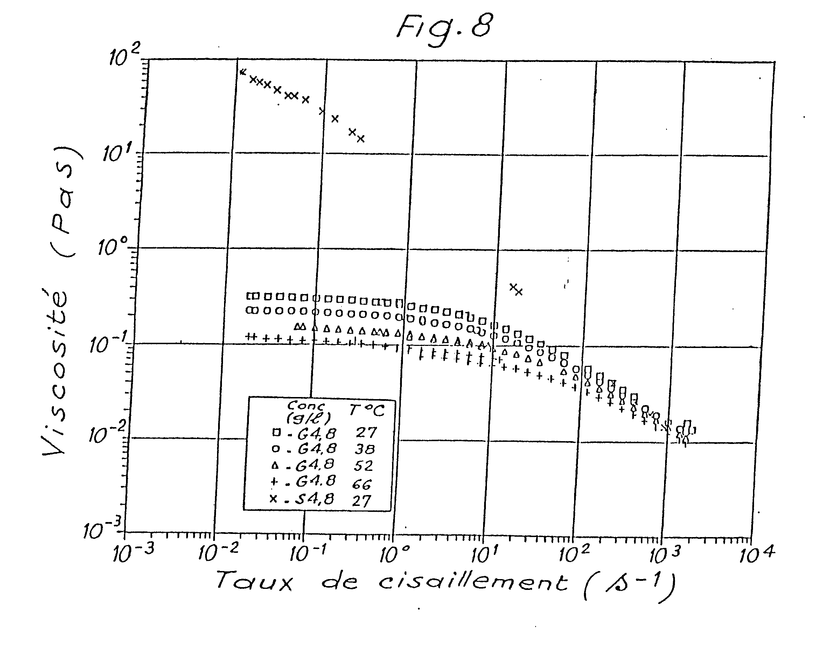

Fig. 8 shows the influence of the temperature on the viscosity curve of the hydroxypropylated guar gum (G) and of the scleroglucane (S).

Viscoelasticity and suspension :

Table III hereinbelow shows the properties of viscoelasticity of the scleroglucane. These properties are quite remarkable. The scleroglucane is more elastic than the hydropropylated guar gum and xanthane. As to the properties of particle suspension in a scleroglucane solution, they have been determined on a solution at 4.8 g/l (0.5 % by weight) of scleroglucane.

The propping agent chosen for these tests was 40/60 bauxite at a concentration of 360 g/l.

The bauxite was mixed with the polymer solution in a Waring mixer for 2 minutes, then the whole was poured in a column of circular section of diameter 50 mm and 2 m in height. After 2 hrs., no sedimentation is observed. After 60 hrs. only 20 % of sedimentation of the bauxite is observed.

Other tests were carried out to compare scleroglucane, hydroxypropylated guar gum and a solution of hydroxypropylated guar gum cross-linked with a titanium salt. At the concentration of 4 g/l, with 300 g/l of 40/60 bauxite, the propping agent immediately sediments in the guar gum solution, whilst no sedimentation of bauxite is observed in the scleroglucane solution nor in the cross-linked solution.

These remarkable suspending and transportation properties may also be advantageously used for cleaning out debris (products of oxidation, deposits, water, etc...) which may be found in a pipeline for conveying oil or gas, or another fluid of the oil industry.

For use as fracturing gel, for propping, or for injection of sand (gravel pack), it is necessary to break the polymer solution in order to reduce its viscosity and to clean the well. The guar gum and its derivatives are generally broken by oxidizing agents such as persulfates, but leave solid residues which reduce the permeability of the fracture and therefore the productivity of the well. Table IV hereinbelow shows the results of the tests carried out on the scleroglucane.

The fracturing agent used is ammonium persulfate.

A decisive advantage of the scleroglucane is that it leaves no solid residue when broken.

It is also possible to break the scleroglucane solution simply by raising the pH up to a value higher than 12 (cf. Table V hereinbelow).

Filtration through a rock :

Table VI hereinbelow gives the data concerning the filtrate and relative to the scleroglucane solutions. A comparison is given in Table VII with the filtrate properties of guar gum solutions.

The filtration tests are carried out in accordance with standard API RP 39 "Standard Procedures for evaluation of hydraulic fracturing fluids" under a differential pressure of 70 $kg/cm^2$. The volume of liquid filtered through the core sample is measured after 1, 4, 9, 16, 25 and 36 minutes, and is plotted on a curve as a function of the square root of the time. The slope of the straight line obtained makes it possible to have access to coefficient $C_w$ (coefficient of loss of fluid) and the ordinate at the origin makes it possible to have access to the coefficient S ("SPURT").

Other tests have been made to determine the aptitude of the scleroglucane solutions to develop their viscosity. The tests were carried out at different pH's (cf. Table VIII) and the highest speed of hydration was observed in acid medium.

It will therefore be advantageous to add an acid buffer in the scleroglucane solution in order to attain a high viscosity very quickly.

Furthermore, even with very intense stirring, during mixing, the scleroglucane solutions do not tend to foam, contrarily to the other conventional polymers.

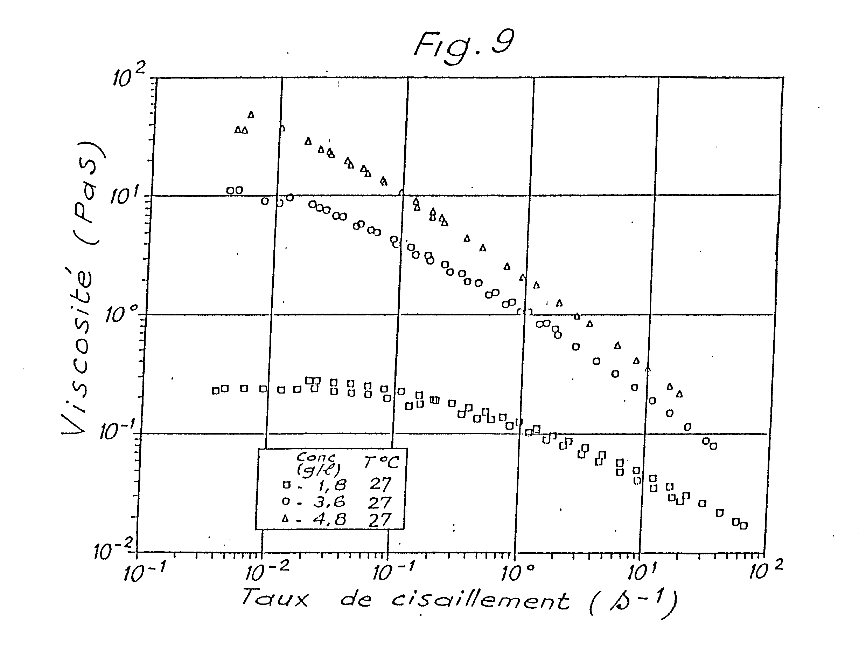

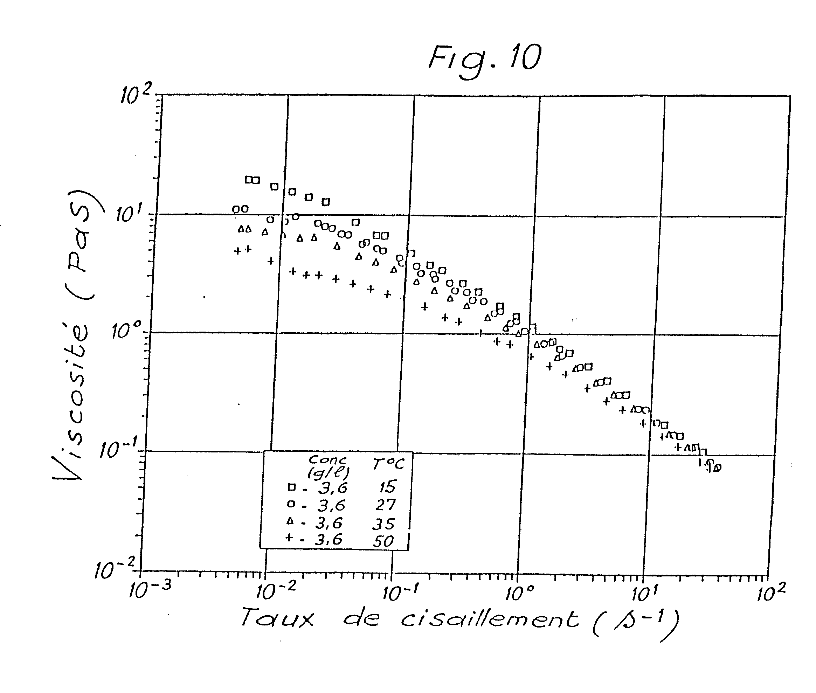

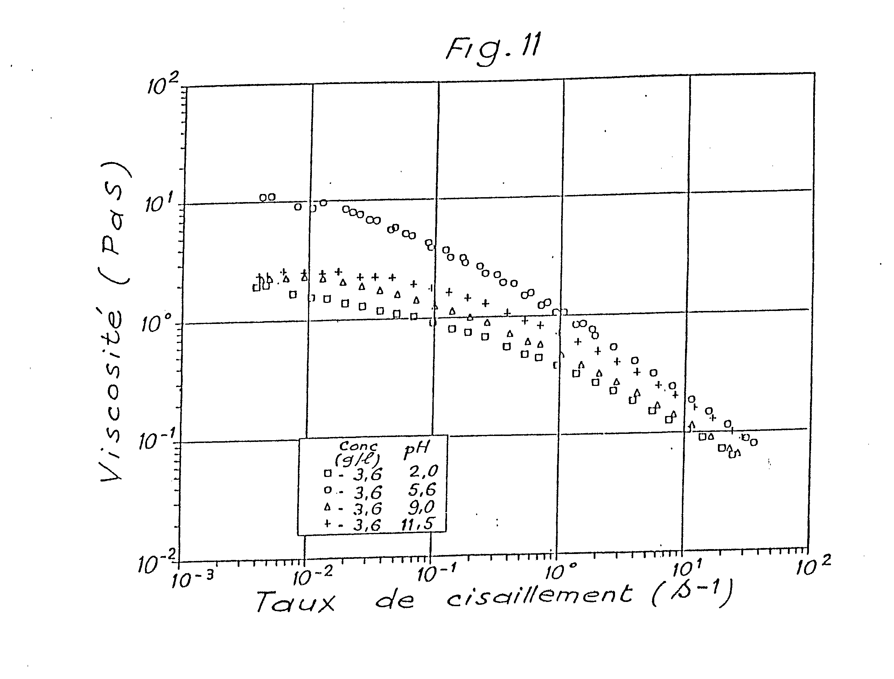

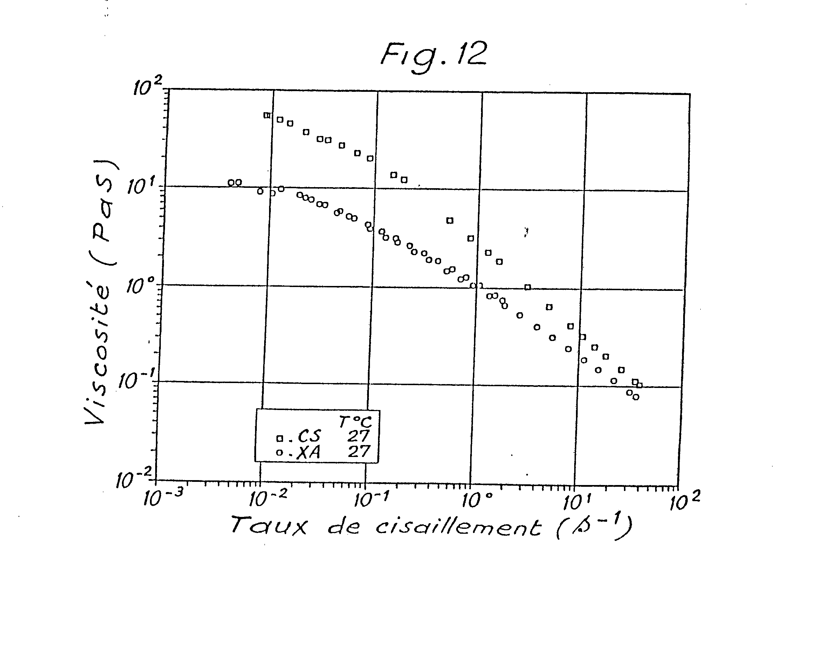

It is also interesting to compare the scleroglucane with xanthane gum which is an anionic polysaccharide obtained by bacterial fermentation. As indicated hereinabove, accompanying Fig. 13 shows the structure of xanthane gum. A xanthane gum produced by the firm Kelco was used for the tests reported in the present specification. The properties of this gum are known and are as follows: a viscosity which is relatively stable as a function of the salinity, the pH, the temperature and the shear stresses, and exceptional qualities of suspension. The properties of xanthane gum in this domain are recalled in accompanying Figs. 9 to 11 and compared with those of scleroglucane in accompanying Fig. 12 (CS = scleroglucane ; XA = xanthane). It is observed that the scleroglucane presents a higher viscosity and a better value of the coefficient n', and therefore offers suspension properties even greater than those, which were already exceptional, of xanthane gum. Moreover, the rheology of the scleroglucane is less dependent on the temperature and the pH. The scleroglucane is also less sensitive to ions (both concerning the nature of the ions and the concentration thereof) than the xanthane gum.

Furthermore, a shear test was made of a scleroglucane solution under 1000 s$^{-1}$ for 3 hours, without any degradation due to the shear being observed.

On reading the properties set forth hereinabove, it is therefore observed that the scleroglucane presents properties which render it suitable for use as basic fluid for treating oil wells and installations, which was not suggested by its heretofore known properties. A particularly surprizing aspect lies in the fact that the scleroglucane presents a very remarkable set of properties of which certain are superior to those of the best agents known.

Thanks to all these advantageous properties of the scleroglucane, the concept and implementation of the treatments of oil wells or installations are considerably simplified. In fact, since the properties of the scleroglucane solutions do not vary with the temperature (up to 275 $^{O}$F), the pH, the salinity of the water or the shear (mode and history), the concept of the treatments, whether they be operations of pipeline cleaning, of gravel pack or of injection of viscous solutions, acid or not, containing propping agents or not, to stimulate the wells, will be considerably simplified. In addition, the operator will be sure of having the exact property expected, which was not always the case with the other types of solutions of polymer, cross-linked or not.

Another important improvement, due to the use of this polymer, concerns implementation. This is also extremely simple as it is no longer necessary to check and adjust the pH, the salinity and the temperature of the mixing water precisely. Moreover, this product disperses easily and hydrates rapidly, which enables it to be used for discontinuous operations, i.e. the polymer solution is prepared and stored before use, or continuous operations, i.e. the solution is prepared at the same time as it is used.

The fact that the scleroglucane solutions hydrate rapidly and have properties superior or at least equal to the conventional cross-linked fluids therefore gives them a very clear operational advantage even over the continuous systems with rapid hydration speed (systems based on guar gum, hydroxypropylated or not, cross-linked with borax and applicable up to temperatures of 212 $^{O}$F). As to the systems cross-linked by metal complexes (application at high temperature), they must be necessarily mixed discontinuously and their implementation is delicate (quality of the water, hydration time, monitoring of the viscosity of the solution, monitoring of the injection of the cross-linking agent during the treatment,...). Moreover, all these cross-linked polymer solutions are extremely sensitive to shear.

As the scleroglucane solutions conserve the same properties up to a temperature of 275 $^{O}$F and as the temperature of the rocks to be treated may very advantageously be lowered by injection of a certain sacrificial volume of water or polymer solution such as guar gum, hydroxypropylated or not, the scleroglucane solutions may also very advantageously replace the polymer systems, cross-linked with metal ions for applications at high temperature.

## TABLE I

| Concentration of polymer (g/l) | Slope n′ of the viscosity curve |
|---|---|
| 0.6 | 0.43 |
| 1.2 | 0.20 |
| 1.8 | 0.13 |
| 2.4 | 0.13 |
| 3.6 | 0.10 |
| 4.8 | 0.15 |

## TABLE II

### Acid gelling properties of scleroglucane
### (viscosity in cPs)

| Time (min) | Concentration of polymer (g/l) | | | (Solvent:water with 1 % KCL) |
|---|---|---|---|---|
| | 2.4 | 3.6 | 4.8 | 3.6 |
| 5 | 19.8 | 27 | 33 | 28.8 |
| 10 | 21 | 28.2 | 36 | 30.6 |
| 15 | 22.2 | 30 | 38.4 | 32.1 |
| 30 | 24 | 33 | 48 | 33.6 |
| 60 | 24.1 | 33.0 | 47.9 | 33.6 |

- Measurement with FANN 35 viscosimeter
    RI BI FO.2.combination

    shear rate : 170 s$^{-1}$

- The acid used is hydrochloric acid (25 % by weight),

- Temperature 80°F.

TABLE III (1)

VISCOELASTIC PROPERTIES OF SCLEROGLUCANE
AND OF HYDROXYPROPYLATED GUAR GUM

| Concentration of polymer (g/l) | 0.6 | | 1.2 | | 1.8 | |
|---|---|---|---|---|---|---|
| Frequency w (Hz) | 0.0065 | 0.14 | 0.0065 | 0.14 | 0.0065 | |
| $\varsigma$ degrees | 72.6 | 66.6 | 72.8 | 38.5 | 42.8 | |
| $\eta'$ (mPa.s) | 125 | 77 | 1 820 | 260 | 4 450 | |
| $G'$ (Pa) | 1.6 | 29 | 23 | 285 | 196 | |
| $\eta^*$ (mPa.s) | 131 | 84 | 1 910 | 415 | 6 550 | |
| $\lambda$ (s) | 7.3 | 0.45 | 7.2 | 0.9 | 18.0 | |
| S C L E R O G L U C A N E | | | | | | |

Notes : T = 80°F ; 1 % KCl ; pH = 5.6
$\varsigma$ = angle of loss
$\eta^*$= complex viscosity
$\eta'$ = dynamic viscosity
$G'$ = modulus of elasticity
$\lambda$ = relaxation time

0146981

## TABLE III (2) follow

### Viscoelastic properties of scleroglucane and of hydroxypropylated guar gum

| Concentration of polymer | 2.4 | | 3.6 | |
|---|---|---|---|---|
| Frequency w (Hz) | 0 0065 | 0.14 | 0.0065 | 0.14 |
| $\varsigma$ degrees | 42.0 | 16.7 | 46.9 | 16.9 |
| $\eta'$ (mPa.s) | 13 100 | 650 | 25 500 | 9 900 |
| G'(Pa) | 515 | 1900 | 970 | 5 300 |
| $\eta*$ (mPa.s) | 16 900 | 2250 | 34 900 | 3 400 |
| $\lambda$ (s) | 18.2 | 1.1 | 16.7 | 0.6 |
| | S C L E R O G L U C A N E | | | |

Notes : T = 80$^{\circ}$F ; 1 % KCl ; pH = 5.6
$\varsigma$ = angle of loss
$\eta*$ = complex viscosity
$\eta'$ = dynamic viscosity
$G'$ = modulus of elasticity
$\lambda$ = relaxation time

-13-

0146981

## TABLE III (3) end

## Viscoelastic properties of scleroglucane and of hydroxypropylated guar gum

| | SCLEROGLUCANE | | GUAR GUM | |
|---|---|---|---|---|
| Concentration of polymer (g/l) | 4.8 | | 4.8 | |
| Frequency w (Hz) | 0.0065 | 0.14 | 0.0065 | 0.14 |
| $\delta$ degrees | 43.2 | 20.9 | 86.4 | 80.6 |
| $\eta'$ (mPa.s) | 43 100 | 3 100 | 435 | 350 |
| G' (Pa) | 1 870 | 7 120 | 2.0 | 51 |
| $\eta^*$ (mPa.s) | 62 900 | 8 670 | 440 | 355 |
| $\lambda$ (s) | 17.8 | 1.0 | 2.8 | 0.2 |

Notes : T = 80°F ; 1 % KCl ; pH = 5.6
$\delta$ = angle of loss
$\eta^*$= complex viscosity
$\eta'$ = dynamic viscosity
G'= modulus of elasticity
$\lambda$ = relaxation time

## TABLE IV

## FRACTURING OF SCLEROGLUCANE SOLUTIONS
## BY OXIDIZING AGENT
### (viscosity in cPs)

| Time (h) \ Concentration of oxidizing agent g/l | 0.012 | 0.12 | 0.24 | 0.48 | 0.6 | 1.2 |
|---|---|---|---|---|---|---|
| 0 | 60 | 60 | 60 | 60 | 60 | 60 |
| 3 | | | | | 57 | 57 |
| 4 | | | 60 | 60 | | |
| 7 | | | 60 | 54 | 13.8 | 4.8 |
| 24 | 60 | 55.8 | 39 | 14.4 | | |
| 48 | 58 | 54 | | | 4.8 | 4.2 |
| 120 | 57 | 50.4 | | | | |

Notes :
Concentration of polymer : 4.8 g/l
Solvent : 1 % KCL solution
$T = 150^{\circ}F$
Measurements in FANN viscosimeter, RI BI FO.2 combination
Shear rate 170 $s^{-1}$

0146981

## TABLE V

## FRACTURING OF A SOLUTION OF SCLEROGLUCANE BY A BASE

| pH | Viscosity cP |
|------|------|
| 5.5 | 43.2 |
| 10 | 43.2 |
| 11 | 43.2 |
| 11.5 | 43.2 |
| 12 | 37.2 |
| 12.5 | 33.6 |
| 12.8 | 27 |
| 13 | 12.6 |

Notes :

Concentration of polymer : 3.6 g/l
Solvent : 1 % KCl solution
T = 80°F
Measurements with FANN 35 viscosimeter, RI BI FO.2
combination
Shear rate : 170 s$^{-1}$

## TABLE VI

### FILTRATION of SOLUTIONS of SCLEROGLUCANE

Concentration in polymer = 4.8 g/l

| Permeability (mD) | T (°F) | Silica flour (g/l) | S (1/m$^2$) | Cw x 1000 |
|---|---|---|---|---|
| 10.7 | 200 | 0.42 | 25 | 8.1 |
| 10.7 | 200 | 1.8 | 16 | 1.5 |
| 23 | 200 | 1.8 | 30 | 3.9 |
| 10.9 | 220 | 1.8 | 18 | 2.3 |

Concentration of polymer = 3.6 g/l

| Permeability (mD) | T (°F) | Silica flour (g/l) | S (1/m$^2$) | Cw x 1000 |
|---|---|---|---|---|
| 11.5 | 200 | 0.42 | 18 | 8.1 |
| 11.6 | 200 | 1.8 | 16 | 4.2 |
| 17.5 | 200 | 1.8 | 26 | 5.0 |
| 11.5 | 220 | 1.8 | 18 | 2.7 |

Concentration of polymer = 2.4 g/l

| Permeability (mD) | T (°F) | Silica flour (g/l) | S (1/m$^2$) | Cw x 1000 |
|---|---|---|---|---|
| 11.7 | 200 | 0.42 | 32 | 8.5 |
| 11.7 | 200 | 1.8 | 14 | 7.6 |
| 23.3 | 200 | 1.8 | 33 | 9.2 |
| 11.5 | 220 | 1.8 | 25 | 10.8 |

Cw = Coefficient of loss of fluid
S = Ordinate at the origin ("SPURT")

## TABLE VII

### FILTRATION.

(Comparison with guar gum)

| Permea-bility (mD) | T (°F) | Polymer | Concen-tration (g/l) | Silica flour (g/l) | S $1/M^2$ | Cw x 1000 |
|---|---|---|---|---|---|---|
| 10.7 | 200 | sclero-glucane | 4.8 | 1.8 | 16 | 1.5 |
| 5-10 | 200 | hydroxy-propylated guar gum | 4.8 | 2.4 | 7 | 2.7 |
| 11.7 | 200 | sclero-glucane | 2.4 | 0.42 | 32 | 8.5 |
| 11.7 | 200 | sclero-glucane | 2.4 | 1 8 | 14 | 7.6 |
| 5-10 | 150 | hydroxy-propylated guar gum | 2.4 | 1.2 | 6 | 4.8 |

Note :

Solvent : 1 % KCl solution
Cw : coefficient of loss of fluid
S  : "SPURT" ordinate at the origin

## TABLE VIII

### DEVELOPMENT OF THE VISCOSITY OF A SOLUTION OF SCLEROGLUCANE AT 3.6 g/1

Hydration : 3 mins. in Waring

mixer at 6 000 r.p.m.

$\theta = 79^{O}F$
Measurement with FANN 35 viscosimeter, RI BI FO.2 combination
　　Shear rate : 170 $s^{-1}$

a) 1 % KCl ; pH = 5.6

| Time (min) | Viscosity (cPs) | % |
|---|---|---|
| 5 | 28.8 | 70.6 |
| 10 | 30.6 | 75 |
| 15 | 32.1 | 78.7 |
| 30 | 33.6 | 82.3 |
| 60 | 36.6 | 89.7 |
| 24 h | 40.8 | 100 % |

b) sea water ; pH = 9

| Time (min) | Viscosity (cPs) | % |
|---|---|---|
| 5 | 27.6 | 67.6 |
| 10 | 29.4 | 72 |
| 15 | 30 | 73.5 |
| 30 | 33 | 80.9 |
| 60 | 36 | 88 |

Hydration : 1 min. in Waring

mixer at 6 000 r.p.m.

$\theta = 79^{O}F$
Measurement with FANN 35 viscosimeter, RI BI FO.2 combination
　　Shear rate : 170 $s^{-1}$

water : 1 % KCl ;
　　　pH = 5.6

| Time (min) | Viscosity (cPs) | % |
|---|---|---|
| 3 | 18 | 44 |
| 5 | 19.8 | 68.5 |
| 10 | 22.8 | 56 |
| 15 | 24.6 | 60.3 |
| 30 | 27.6 | 67.6 |
| 60 | 33.6 | 82.3 |
| 24 h | 40.8 | 100 % |

c) hydration : 3 mins.
　　　in Waring
mixer at 6 000 r.p.m.

$\theta = 79^{O}F$
Measurement with FANN 35 viscosimeter ;

RI BI FO.2 combination

Shear rate : 170 $s^{-1}$
water : 1 % KCl ;
　　　pH = 2

| Time (min) | Viscosity (cPs) | % |
|---|---|---|
| 5 | 36 | 78 |
| 10 | 40.2 | 88 |
| 15 | 43.8 | 95 |
| 30 | 45.6 | 100 |
| 60 | 46 | 100 |

## C L A I M S

1.      Use of scleroglucan polymers as a visqueous solution for the treatment of gas or oil wells or of pipes conveying the fluids of oil industry, in order to maintain or modify the flow and drainage features of the fluids which are produced by said wells, injected into said wells, or conveyed by said pipes, wherein a useful amount of a visqueous solution of scleroglucan polymers is introduced into the said fluids as produced, injected or conveyed, said useful amount being determined with taking into account the strongly non-newtonian feature of the scleroglucans' rheology.

2.      Use of claim 1 wherein the scleroglucan concentration is higher than 0.06 % by weight.

3.      Use of claim 1 wherein said solution is recovered after the well or pipe treatment.

4.      Use of claim 3 wherein said solution is broken before being recovered.

5.      Use of claim 1 wherein a useful amount of scleroglucan polymers as a visqueous solution is used as :
- fluid for fracturing of subterranean formations ;
- suspending fluid for solid particles or air or gas bubbles ;
- acid-gelling agent ;
- completion fluid namely viscosifying agent or fluid-loss additive ;
- cleanout agent for pipes.

6.      Use of claim 5 as fluid for fracturation.

7.      Use of claim 5 as propping agent transportation fluid or fluid for sand-injection.

8.      Use of claim 5 as foam stabilizer.

9.      Use of claim 5 as acid gelling agent, for an acid concentration up to 35 % by weight and for a temperature up to $140°F$ when a 28 % by weight acid is used.

10.     Use of claim 5 as viscosifying agent and fluid loss additives in brines, namely in $CaCl_2$, $CaBr_2$, KCl, NaCl and/or $ZnBr_2$ brines up to the saturation point.

11.     Use of claim 1, wherein the scleroglucan polymers concentration lies between 0.24 to 1.2 % by weight.

Motif de structure du scléroglucane

Figure 1

Fig.2

2/13

0146981

Fig. 3

| Conc. (g/ℓ) | | T°C |
|---|---|---|
| □ | 0,6 | 27 |
| ○ | 1,2 | 27 |
| △ | 1,8 | 27 |
| + | 2,4 | 27 |
| × | 3,6 | 27 |
| ◇ | 4,8 | 27 |

Viscosité ( Pa.s )

Taux de cisaillement ( s⁻¹ )

0146981

Fig.4

Fig.5

Fig.6

Viscosité ( Pa S )

Taux de cisaillement ( s⁻¹ )

| Conc. (g/ℓ) | T°C |
|---|---|
| □ - 4,8 | 50 |
| o - 4,8 | 71 |
| Δ - 4,8 | 90 |
| + - 4,8 | 110 |
| x - 4,8 | 140 |
| ◇ - 4,8 | 140 |
| ▽ - 4,8 | 30 |

6/13

0146981

Fig. 7

7 / 13

0146981

Fig. 8

8/13

0146981

Fig. 9

Fig. 10

Fig.11

0146981

Fig.12

Viscosité (Pa.s)

Taux de cisaillement (s⁻¹)

|  | T°C |
|---|---|
| □-CS | 27 |
| o-XA | 27 |

Structure de la gomme xanthane

Figure 13

European Patent Office

**EUROPEAN SEARCH REPORT**

EP 84 20 1695

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,X | US-A-4 347 146 (M.K. ABDO)<br><br>* Claims 1,2; column 4, lines 3-53 *<br><br>--- | 1,2,5, 7,10, 11 | E 21 B 43/22<br>E 21 B 43/02<br>E 21 B 43/25<br>E 21 B 43/27 |
| D,X | US-A-3 372 749 (S.A. WILLIAMS)<br><br>* Claims 1,5; column 3, lines 13-35; column 4, lines 37-41 *<br><br>----- | 1,2,5, 7,10, 11 | |

TECHNICAL FIELDS SEARCHED (Int. Cl.4)

E 21 B

The present search report has been drawn up for all claims

| Place of search | Date of completion of the search | Examiner |
|---|---|---|
| THE HAGUE | 08-03-1985 | ROTSAERT L.D.C. |

EPO Form 1503. 03.82